# EUROPÄISCHE PATENTANMELDUNG

(11) **EP 1 437 047 A1**
(43) Veröffentlichungstag der Anmeldung: **14.07.2004**
(21) Anmeldenummer: 03028934.2
(22) Anmeldetag: 17.12.2003
(51) Int. Cl.: A23C 19/064, A23C 19/10

(54) **Verpackungsgereifter Käse in Salzlake**

(30) Priorität: 10.01.2003 DE 10300849
(71) Anmelder: Hochland AG, 88178 Heimenkirch/Allgäu (DE)
(72) Erfinder: Sailer, Lucia, 86980 Ingenried (DE)
(74) Vertreter: COHAUSZ DAWIDOWICZ HANNIG & PARTNER

(57) **Zusammenfassung**

Die Erfindung betrifft ein Verfahren zur Herstellung von Käse, der nach einem Käsungsvorgang in Salzlake reift wobei die Reifung des Käses in einer Salzlake in der Endverbraucherpackung erfolgt. Die Erfindung betrifft weiterhin einen Käse, der in Salzlake gereift ist, wobei der Käse eine Trockenmasse von maximal 43%, insbesondere weniger als 40% aufweist.

## Beschreibung

Die Erfindung betrifft ein Verfahren zur Herstellung von Käse, der nach einem Käsungsvorgang in Salzlake reift.

Es ist bekannt Käse, z.B. nach Feta-Art, nach dem Käsungsvorgang in einer Salzlake reifen zu lassen. Hierzu wird ein Käse nach dem eigentlichen Käsungsvorgang aus der Form gezogen und anschließend in Form ganzer Blöcke in Salzlakewannen eingelegt. Über eine Dauer von etwa 5 - 7 Tagen reift der Käse in dieser Blockgröße innerhalb der Salzlakewannen bei einem Temperaturbereich von etwa 3 - 8 Grad Celsius in einer Salzlake mit bis zu 20% Natriumchloridanteil.

Am Ende dieser mehrtägigen Reifung wird ein gereifter Käseblock aus dem Salzlakebad genommen und insbesondere nach einer kurzen Trocknungszeit in für einen Endverbraucher geeignete Größen von insbesondere 150, 200 oder 250g schweren Scheiben geschnitten. Diese, insbesondere in annähernd trockenem Zustand aufgeschnittenen Käseblöcke werden sodann scheibenweise für den Endverbraucher verpackt, beispielsweise durch Verpackung in Tiefziehfolie.

Im letzten Verfahrensschritt erfolgt üblicherweise eine Kühlung bis 8 Grad Celsius und der Versand der verpackten Endverbrauchereinheiten. Der Gesamtprozess dieser bekannten Käseherstellung beträgt je nach Dauer der Reifung der Käseblöcke im Salzbad etwa 7 - 1 0 Tage. Der so hergestellte Käse hat eine Trockenmasse von üblicherweise mindestens 45% und einen Fettanteil in der Trockenmasse von mindestens 45%.

Das oben genannte Verfahren hat insgesamt den Nachteil, dass der Gesamtherstellungsprozess vom Käsungsvorgang bis zur Verpackung des Käses in Endverbraucherpackungen etwa die genannten 7 - 10 Tage in Anspruch nimmt und aufgrund der Reifung des Käses in großen Blöcken innerhalb der Salzlakewannen der Käse einen eher ungleichmäßigen Salzgehalt bis hin zu einer Salzkruste aufweist.

Aufgabe der Erfindung ist es ein Verfahren zur Herstellung von Käse mit einem zeitlich geringeren Aufwand und einem gleichmäßiger gesalzenen Käse bereitzustellen. Aufgabe ist es weiterhin einen wirtschaftlich und leicht herzustellenden Käse mit gleichmässigem Salzgehalt bereitzustellen.

Diese Aufgabe wird gemäß dem erfindungsgemäßen Verfahren dadurch gelöst, dass die Reifung des Käses in einer Salzlake in der Endverbraucherpackung erfolgt. Die Aufgabe wird weiterhin durch einen insbesondere auf diese Art hergestellten Käse gelöst.

Bei dem erfindungsgemäßen Verfahren zur Herstellung von Käse wird im Gegensatz zu dem bekannten Verfahren der aus der Form gezogene Käse am Ende des Käsungsvorganges direkt in Endverbrauchergrößen, insbesondere in Scheiben geschnitten, mit einem Gewicht von z.B. 150, 200 oder 250g.

Aufgrund des sofortigen Schneidens der Käseblöcke nach dem Käsungsvorgang besteht nicht mehr die Notwendigkeit die Käseblöcke als Ganzes in der Salzlake reifen zu lassen, sondern es kann erfindungsgemäß eine Reifung der einzelnen, bereits in Endverbrauchergrößen geschnittenen Käsescheiben erfolgen. Dementsprechend kann der auf Endverbrauchergröße zurecht geschnittene Käse direkt nach dem Käsungsvorgang in die Endverpackung eingelegt werden, wobei eine Salzlake in die Endverbraucherpackung hinzudosiert wird.

Aufgrund der kleineren Käsestücke, insbesondere der scheibenförmigen Stücke mit einer geringen Dicke, kann für den Reifungsprozess innerhalb der Salzlake bereits eine geringere Salzkonzentration von bis zu 14% Natriumchloridanteil ausreichend sein.

Nach der Dosierung der Salzlake kann die Endverbraucherpackung mit dem eingelegten Käse und der Salzlake verschlossen werden, wobei bevorzugt eine Schutzgasatmosphäre vorgesehen wird, so dass der Käse in der Salzlake unter dem Schutzgas weiter reifen kann. Dieses Schutzgas kann beispielsweise zu 90% aus Stickstoff und 10% aus CO₂ bestehen. Auch andere Schutzbegasungen sind hier möglich.

Gemäß dem erfindungsgemäßen Verfahren erfolgt dementsprechend die Reifung des Käses nach der Verpackung und der Dosierung der Salzlake direkt innerhalb der Endverbraucherpackung, wobei aufgrund der kleineren Käseblockeinheiten auch eine kleinere Reifezeit erreichbar ist. Besonders bevorzugt wird zur Reifung des Käses innerhalb der Endverbraucherpackung die Verpackung mit dem Käse bei einer Temperatur von bis zu 30 Grad gelagert, insbesondere über eine Zeit von z.B. 24 Stunden.

Nach Abschluss dieser Temperaturbehandlung wird die Endverbraucherpackung mit dem Käse auf eine Temperatur von bis zu 8 Grad Celsius gekühlt, in Kartons gestapelt und versandt.

Das erfindungsgemäße Verfahren hat gegenüber dem Stand der Technik den Vorteil, dass der Gesamtprozess der Käseherstellung bis zum versandfertigen Produkt lediglich maximal 4 Tage dauert. Aufgrund der Reifung in kleineren Einheiten ergibt sich auch insbesondere gegenüber dem herkömmlichen Verfahren ein gleichmäßigerer Salzgehalt des Käses und ein spezieller feinmilder, cremiger und weicher Charakter.

Wegen der sofortigen und kürzeren Verarbeitung hat der so hergestellte Käse eine für dieses Verfahren typische Trockenmasse von maximal 43%. Gegenüber den üblichen konventionellen Verfahren zeichnet sich der Käse somit besonders durch eine geringere Trockenmasse aus. Besonders bevorzugt wird eine Trockenmasse von weniger als 40% erreicht. Der Fettanteil in der Trockenmasse beträgt z.B. mindestens 45%.

Letztgenannte Trockenmasse bezieht sich auf einen Fettgehalt in der Trockenmasse von 45%.

Das Verfahren kann auch für andere FiTr.-Stufen angewandt werden. Obengenannte Trockenmassen verändern sich dementsprechend (d.h. bei einem niedrigeren FiTr. als 45% sind diese Trockenmassen niedriger).

Die Verpackung des Käses kann in Form einer Hartbox ausgebildet sein, die bevorzugt wiederverschließbar ist, so dass der Käse vom Verbraucher nach dem Öffnen und teilweisen Verzehr wieder in die Hartbox zurückgelegt werden kann, wo der Käse bis zum nächsten Verkehr in der Salzlake verweilt. Die Hartbox kann verschlossen und wieder geöffnet werden und somit über längere Zeit zur Lagerung des Käses, z.B. im Kühlschrank, verwendet werden.

## Patentansprüche

1. Verfahren zur Herstellung von Käse, der nach einem Käsungsvorgang in Salzlake reift **dadurch gekennzeichnet, dass** die Reifung des Käses in einer Salzlake in der Endverbraucherpackung erfolgt.

2. Verfahren nach Anspruch 1, **dadurch gekennzeichnet, dass** der Käse nach dem Käsungsvorgang in Endverbrauchergrößen geschnitten und mit einer Salzlake in eine Endverbraucherpackung eingelegt wird.

3. Verfahren nach einem der vorherigen Ansprüche, **dadurch gekennzeichnet, dass** die Salzlake eine Salzkonzentration bis 14 % NaCl aufweist.

4. Verfahren nach einem der vorherigen Ansprüche, **dadurch gekennzeichnet, dass** die Endverbraucherpackung eine Schutzgasatmosphäre aufweist.

5. Verfahren nach einem der vorherigen Ansprüche, **dadurch gekennzeichnet dass** der Käse in der Endverbraucherpackung einer Temperaturbehandlung unterzogen wird.

6. Verfahren nach Anspruch 5, **dadurch gekennzeichnet, dass** der Käse zur Reifung bei einer Temperatur von bis zu 30 Grad Celsius gelagert wird, insbesondere über eine Zeit von 24 Stunden.

7. Verfahren nach Anspruch 6, **dadurch gekennzeichnet dass** der Käse nach der Reifung bei einer Temperatur bis zu 8 Grad Celsius gelagert wird.

8. Verfahren nach einem der vorherigen Ansprüche, **dadurch gekennzeichnet, dass** der Käse in eine wiederverschließbare Endverbracherverpackung eingelegt wird.

9. Käse, der in Salzlake gereift ist, **dadurch gekennzeichnet, dass** der Käse in der Endverbraucherpackung in Salzlake gereift ist.

10. Käse nach Anspruch 9, **dadurch gekennzeichnet, dass** er eine Trockenmasse von maximal 43%, insbesondere weniger als 40% aufweist.

11. Käse nach Anspruch 10, **dadurch gekennzeichnet, dass** er einen Fettgehalt in der Trockenmasse von mindesten 45% aufweist.
